# EUROPEAN PATENT SPECIFICATION

(11) **EP 3 969 536 B1**
(45) Date of publication and mention of the grant of the patent: **11.09.2024**
(21) Application number: 20729923.1
(22) Date of filing: 15.05.2020
(51) Int. Cl.: C09K 5/04

(54) **REFRIGERANT COMPRESSOR SYSTEMS**
KÄLTEMITTELVERDICHTERSYSTEME
SYSTÈMES À COMPRESSEURS FRIGORIFIQUES

(30) Priority: 17.05.2019 US 201962849451 P
(43) Date of publication of application: 23.03.2022
(73) Proprietor: The Chemours Company FC, LLC, Wilmington, Delaware 19801 (US)
(72) Inventor: SPLETZER, Stephen, King of Prussia, Pennsylvania 19406 (US); MINOR, Barbara Haviland, The Villages, FL 32163 (US)
(74) Representative: Abitz & Partner
(86) International application number: PCT/US2020/033013
(87) International publication number: WO 2020/236536

(56) References cited:
- EP-A2- 2 149 592
- US-A1- 2015 152 307
- MAREK ZGLICZYNSKI ET AL: "Thermal Profile Of A Reciprocating Compressor Using Low GWP Refrigerants", INTERNATIONAL COMPRESSOR ENGINEERING CONFERENCE, 9 July 2018 (2018-07-09), XP055713035
- JOZEF SEDLIAK: "TEST REPORT #50 Compressor Calorimeter Test of Refrigerant Blend DR-3 in a R-404A Reciprocating Compressor", 23 September 2015 (2015-09-23), pages 1 - 36, XP055713017, Retrieved from the Internet <URL:http://www.ahrinet.org/App_Content/ahri/files/RESEARCH/AREP_Final_Reports/AHRI_Low_GWP_AREP_Rpt_050.pdf> [retrieved on 20200708]
- STEPHAN BACHMANN: "Hermetic reciprocating compressors. Fitters Notes (Part 3)", TECHNOLOGY | COMPRESSORS, 1 March 2008 (2008-03-01), pages 1 - 3, XP055712649, Retrieved from the Internet <URL:http://files.danfoss.com/TechnicalInfo/Rapid/RA/Article/FittersNotesCompressorUK/Article_Fitters%20Notes_Compressor_Part%203%20(2).pdf> [retrieved on 20200708]

## Description

### FIELD

The present invention is directed to refrigerant compositions for refrigerant compressor systems.

### BACKGROUND

Refrigerants with very low global warming potential (GWP < 150) are needed to meet regulatory requirements for various applications and market segments. Several alternatives have been developed, to replace conventional high GWP refrigerants, such as R-404A. Many of the low GWP refrigerants suggested for this replacement, such as R-457A, exhibit higher discharge temperatures than the high GWP refrigerants, such as R-404A which they replace. This can limit their effectiveness by reducing a compressor's operating envelope. This can be particularly critical for low back pressure (LBP) hermetic reciprocating compressors, used in low temperature refrigeration, as many of these models do not employ an active discharge temperature control system, such as liquid or vapor injection. Left unchecked, the higher discharge temperatures generated in these LBP applications could potentially reduce compressor longevity. Without the ability to actively mitigate discharge temperatures, use of these compressors may be limited to applications with higher evaporator temperatures and/or lower condensing temperatures. Marek Zgliczynski et al: Thermal Profile of a reciprocating compressor using low GWP refrigerants, International Engineering conference, 9 July 2018, XP055713035 describes refrigerant R-457A (HFC-32, HFO-1234yf, HFC-152a in a weight ratio 18/70/12) and R-454C (HFC-32, HFO-1234yf in a weight ratio 21.5/78.5).

### SUMMARY

In an exemplary embodiment, a refrigeration system including a low back pressure (LBP) hermetic reciprocating compressor and a refrigerant composition, wherein the refrigerant composition includes difluoromethane (R-32) and 2,3,3,3-tetrafluoropropene (R-1234yf) in the amounts defined in claim 1, or wherein the refrigerant composition includes 1,1-difluoroethane (R-152a), difluoromethane (R-32) and 2,3,3,3-tetrafluoropropene (R-1234yf) in the amounts defined in claim 1.

In another exemplary embodiment, a method of replacing a first refrigerant composition comprising R-404A, R-457A, R-290, or R-454C with a second refrigerant composition comprising 82 to 83 weight percent 2,3,3,3-tetrafluoropropene and 17 weight percent to 18 weight percent difluoromethane. The replacing is performed in a refrigeration system including a low back pressure (LBP) hermetic reciprocating compressor.

In another exemplary embodiment, a method of operating a low back pressure (LBP) hermetic reciprocating compressor as part of a refrigeration system. The method includes the steps of receiving by a low back pressure (LBP) hermetic reciprocating compressor a refrigerant composition as defined in claim 9 including difluoromethane (R-32), and 2,3,3,3-tetrafluoropropene (R-1234yf) and compressing by low back pressure (LBP) hermetic reciprocating compressor the refrigerant composition. The discharge temperature of the compressor is between 78.0°C and 102.0°C.

Other features and advantages of the present invention will be apparent from the following more detailed description of the preferred embodiment which illustrates, by way of example, the principles of the invention.

### BRIEF DESCRIPTION OF THE DRAWINGS

FIG. 1 is a schematic diagram of a refrigeration system, according to an embodiment.
FIG. 2 is a schematic diagram of a refrigeration system, according to an embodiment.

### DETAILED DESCRIPTION

Provided are low global warming potential (GWP) refrigerant compositions exhibiting low discharge temperatures and high heat capacity. The refrigerant compositions are suitable for use in low back pressure (LBP) hermetic reciprocating compressors, used in low temperature refrigeration applications.

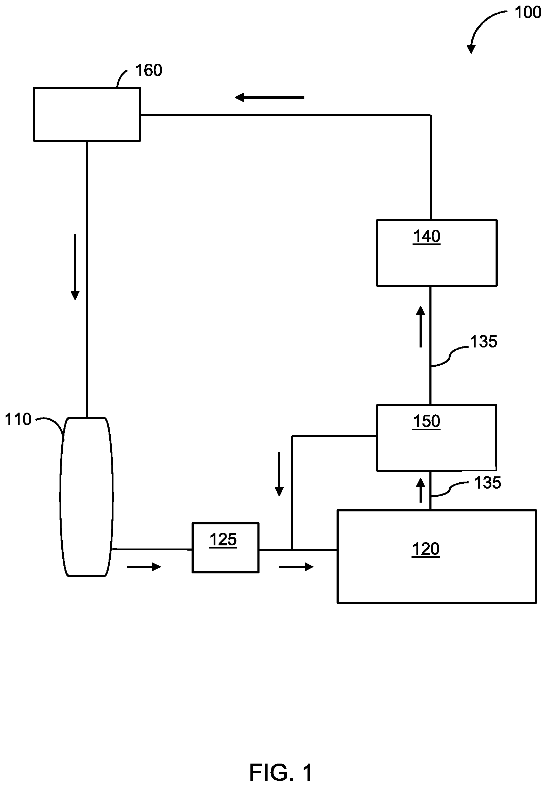

An embodiment of a refrigeration system 100 is shown in FIG. 1. In the embodiment of FIG. 1 the refrigeration system 100 includes a receiving tank 110. The receiving tank 110 contains a refrigerant composition and supplies the refrigerant composition to the other components of the refrigeration system 100 during operation.

The refrigerant composition may be selected from materials having a low global warming potential (GWP). In some embodiments, the refrigerant composition exhibits a GWP of less than 180, less than 150, and/or less than 120. In some embodiments, the refrigerant composition may be selected to replace a refrigerant composition having a high GWP. In some embodiments, the refrigerant composition may be selected to replace refrigerant compositions such as R-404A, R-290, R-454C, R-457A, and R-507A. Replacement compositions desirably provide similar or improved properties to as compared to R-404A. Similar properties may include flammability, discharge temperature, and heat transport capacity.

Suitable refrigerant compositions for the replacement of R-404A refrigerants include difluoromethane (R-32), and 2,3,3,3-tetrafluoropropene (R-1234yf) in amounts as defined in claim 1 or 9. In some embodiments, the refrigerant compositions may further include 1,1-difluoroethane (R-152a) in amounts as defined in claim 1 or 9. In some embodiments, the refrigerant composition may be a non-azeotropic refrigerant composition.

In an embodiment, the refrigeration system 100 may be a direct expansion refrigeration system. During operation of the refrigeration system 100, the refrigerant composition circulates throughout the refrigeration system 100 as part of the heat transfer processes. In the example of FIG. 1, the receiving tank 110 is operably coupled to an evaporator 120 via an expansion device 125 such as an orifice tube, capillary tube, thermal expansion valve or electronic expansion valve. The expansion device 125, supplies the refrigerant composition to the evaporator 120. In some embodiments, the receiving tank 110 is optional. In such embodiments, the refrigerant is provided directly to the evaporator 120 without a receiver. In an embodiment, the refrigerant composition is transported between the receiving tank 110 and evaporator 120 via the expansion device 125. In some embodiments, the evaporator 120 may be operated in a low temperature mode. For the purposes described herein low temperature evaporator operation is between - 40°C and -18°C. In some embodiments, the evaporator 120 may be operated in a medium temperature mode. For the purposes described herein medium temperature evaporator operation is between -20°C and -5°C.

The evaporator 120 is operably connected to a compressor 140 via a suction line 135. The compressor 140 increases the pressure of the vaporous refrigerant entering the compressor 140. In some embodiments, the compressor 140 may be a low back pressure (LBP) hermetic reciprocating compressor. In an embodiment, the refrigerant composition is a non-azeotropic composition including difluoromethane (R-32), and 2,3,3,3-tetrafluoropropene (R-1234yf). In another embodiment, the refrigerant composition is a non-azeotropic composition including difluoromethane (R-32), 2,3,3,3-tetrafluoropropene (R-1234yf), and 1,1-difluoroethane (R-152a). In some embodiments, the discharge temperature of the low back pressure (LBP) hermetic reciprocating compressor is between 78.0°C and 102.0°C, between 78.0°C and 99.0°C, between 83.5°C and 102.0°C and combinations thereof.

The compressor 140 is operably connected to a condenser 160. The condenser 160 receives the pressurized vapor refrigerant and allows the pressurized vapor evaporator to transfer heat to an external medium and condense to the liquid state.

The condenser 160 is operably connected to the receiving tank 110. The liquid refrigerant returns to the receiving tank 110 and is again available to absorb heat by again being provided to the evaporator 120.

In compositions intended to replace conventional high GWP refrigerant, it is desirable that the replacement refrigerant composition exhibit a low GWP as well as similar or improved refrigerant properties compared to the refrigerant it is replacing. In some embodiments, the refrigerant composition is intended to replace R-457A. In an embodiment, the refrigerant composition includes difluoromethane (R-32) in an amount of 17 to 18 weight percent based on the weight of the refrigerant composition and 2,3,3,3-tetrafluoropropene (R-1234yf) in an amount of 82 to 83 weight percent based on the weight of the refrigerant composition. In one embodiment, the refrigerant composition includes difluoromethane (R-32) in an amount of 18 weight percent based on the weight of the refrigerant composition and 2,3,3,3-tetrafluoropropene (R-1234yf) in an amount of 82 weight percent based on the weight of the refrigerant composition.

In an embodiment, the refrigerant composition is a non-azeotropic composition including difluoromethane (R-32), 2,3,3,3-tetrafluoropropene (R-1234yf), and 1, 1 -difluoroethane (R-152a), wherein the refrigerant composition includes difluoromethane (R-32) in an amount of 17 to 19 weight percent, and/or about 18 weight percent based on the weight of the refrigerant composition, 2,3,3,3-tetrafluoropropene (R-1234yf) in an amount of 75 to 78 weight percent based on the weight of the refrigerant composition, and 1,1-difluoroethane (R-152a) in an amount of 4 to 7 weight percent based on the weight of the refrigerant composition.

In some embodiments, the refrigerant composition is intended to replace R-457A. In an embodiment, the refrigerant composition includes difluoromethane (R-32) in an amount of 18 weight percent based on the weight of the refrigerant composition, 2,3,3,3-tetrafluoropropene (R-1234yf) in an amount of 76 to 77 weight percent based on the weight of the refrigerant composition, and 1,1-difluoroethane (R-152a) in an amount of 5 to 6 weight percent based on the weight of the refrigerant composition. In one embodiment, the refrigerant composition includes difluoromethane (R-32) in an amount of 18 weight percent based on the weight of the refrigerant composition and 2,3,3,3-tetrafluoropropene (R-1234yf) in an amount of 82 weight percent based on the weight of the refrigerant composition.

The refrigerant compositions may further comprise one or more optional non-refrigerant components selected from the group consisting of lubricants, dyes (including UV dyes), solubilizing agents, compatibilizers, stabilizers, tracers, antiwear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof. In some embodiments, the optional non-refrigerant components may be referred to as additives. Indeed, many of these optional non-refrigerant components fit into one or more of these categories and may have qualities that lend themselves to achieve one or more performance characteristic.

In order to facilitate the operation and extend the service life of the compressor 140 a lubricant may be included in the refrigerant composition. Solubility and miscibility of the lubricant with the refrigerant composition may improve the performance of the lubricant and extend the service life of the compressor 140. In some embodiments, the lubricant may include mineral oil, alkylbenzene, polyol esters, polyalkylene glycols, polyvinyl ethers, polycarbonates, perfluoropolyethers, silicones, silicate esters, phosphate esters, paraffins, naphthenes, polyalpha-olefins, and combinations thereof. In one embodiment, the lubricant includes a polyol ester.

An optional non-refrigerant component used with the refrigerant compositions may be a stabilizer selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof, meaning mixtures of any of the stabilizers disclosed in this paragraph.

The stabilizer may be selected from the group consisting of tocopherol; hydroquinone; t-butyl hydroquinone; monothiophosphates; and dithiophosphates, commercially available from Ciba Specialty Chemicals, Basel, Switzerland, hereinafter "Ciba", under the trademark Irgalube^{®} 63; dialkylthiophosphate esters, commercially available from Ciba under the trademarks Irgalube^{®} 353 and Irgalube^{®} 350, respectively; butylated triphenylphosphorothionates, commercially available from Ciba under the trademark Irgalube^{®} 232; amine phosphates, commercially available from Ciba under the trademark Irgalube^{®} 349 (Ciba); hindered phosphites, commercially available from Ciba as Irgafos^{®} 168 and Tris-(di-tert-butylphenyl)phosphite, commercially available from Ciba under the trademark Irgafos^{®} OPH; (Di-n-octyl phosphite); and iso-decyl diphenyl phosphite, commercially available from Ciba under the trademark Irgafos^{®} DDPP; trialkyl phosphates, such as trimethyl phosphate, triethylphosphate, tributyl phosphate, trioctyl phosphate, and tri(2-ethylhexyl)phosphate; triaryl phosphates including triphenyl phosphate, tricresyl phosphate, and trixylenyl phosphate; and mixed alkyl-aryl phosphates including isopropylphenyl phosphate (IPPP), and bis(t-butylphenyl)phenyl phosphate (TBPP); butylated triphenyl phosphates, such as those commercially available under the trademark Syn-O-Ad^{®} including Syn-O-Ad^{®} 8784; tert-butylated triphenyl phosphates such as those commercially available under the trademark Durad^{®}620; isopropylated triphenyl phosphates such as those commercially available under the trademarks Durad^{®} 220 and Durad^{®}110; anisole; 1,4-dimethoxybenzene; 1,4-diethoxybenzene; 1,3,5-trimethoxybenzene; myrcene, alloocimene, limonene (in particular, d-limonene); retinal; pinene (α or β forms); menthol; geraniol; farnesol; farnesene (α or β forms); phytol; Vitamin A; terpinene; delta-3-carene; terpinolene; phellandrene; fenchene; dipentene; caratenoids, such as lycopene, beta carotene, and xanthophylls, such as zeaxanthin; retinoids, such as hepaxanthin and isotretinoin; bornane; 1,2-propylene oxide; 1,2-butylene oxide; n-butyl glycidyl ether; trifluoromethyloxirane; 1,1-bis(trifluoromethyl)oxirane; 3-ethyl-3-hydroxymethyl-oxetane, such as OXT-101 (Toagosei Co., Ltd); 3-ethyl-3-((phenoxy)methyl)-oxetane, such as OXT-211 (Toagosei Co., Ltd); 3-ethyl-3-((2-ethyl-hexyloxy)methyl)-oxetane, such as OXT-212 (Toagosei Co., Ltd); ascorbic acid; methanethiol (methyl mercaptan); ethanethiol (ethyl mercaptan); Coenzyme A; dimercaptosuccinic acid (DMSA); grapefruit mercaptan ((R)-2-(4-methylcyclohex-3-enyl)propane-2-thiol)); cysteine ((R)-2-amino-3-sulfanyl-propanoic acid); lipoamide (1,2-dithiolane-3-pentanamide); 5,7-bis(1,1-dimethylethyl)-3-[2,3(or 3,4)-dimethylphenyl]-2(3H)-benzofuranone, commercially available from Ciba under the trademark Irganox^{®} HP-136; benzyl phenyl sulfide; diphenyl sulfide; diisopropylamine; dioctadecyl 3,3'-thiodipropionate, commercially available from Ciba under the trademark Irganox^{®} PS 802 (Ciba); didodecyl 3,3'-thiopropionate, commercially available from Ciba under the trademark Irganox^{®} PS 800; di-(2,2,6,6-tetramethyl-4-piperidyl)sebacate, commercially available from Ciba under the trademark Tinuvin^{®} 770; poly-(N-hydroxyethyl-2,2,6,6-tetramethyl-4-hydroxy-piperidyl succinate, commercially available from Ciba under the trademark Tinuvin^{®} 622LD (Ciba); methyl bis tallow amine; bis tallow amine; phenol-alpha-naphthylamine; bis(dimethylamino)methylsilane (DMAMS); tris(trimethylsilyl)silane (TTMSS); vinyltriethoxysilane; vinyltrimethoxysilane; 2,5-difluorobenzophenone; 2',5'-dihydroxyacetophenone; 2-aminobenzophenone; 2-chlorobenzophenone; benzyl phenyl sulfide; diphenyl sulfide; dibenzyl sulfide; ionic liquids; and mixtures and combinations thereof.

The optional non-refrigerant component which is used with compositions of the present invention may alternatively be a tracer. The tracer may be a single compound or two or more tracer compounds from the same class of compounds or from different classes of compounds. In some embodiments, the tracer is present in the compositions at a total concentration of about 1 part per million by weight (ppm) to about 5000 ppm, based on the weight of the total composition. In other embodiments, the tracer is present at a total concentration of about 10 ppm to about 1000 ppm. In other embodiments, the tracer is present at a total concentration of about 20 ppm to about 500 ppm. In other embodiments, the tracer is present at a total concentration of about 25 ppm to about 500 ppm. In other embodiments, the tracer is present at a total concentration of about 50 ppm to about 500 ppm. Alternatively, the tracer is present at a total concentration of about 100 ppm to about 300 ppm.

The tracer may be selected from the group consisting of hydrofluorocarbons (HFCs), deuterated hydrofluorocarbons, chlorofluororcarbons (CFCs), hydrofluorochlorocarbons (HCFCs), hydrofluoroolefins (HFOs), chlorocarbons, perfluorocarbons, fluoroethers, brominated compounds, iodated compounds, alcohols, aldehydes and ketones, nitrous oxide and combinations thereof. Alternatively, the tracer may be selected from the group consisting of trifluoromethane (HFC-23), 1,1,1,3-tetrafluoropropene (HFO-1234ze, cis or trans), 3,3,3-trifluoropropene (HFO-1243zt), 1,2,3,3,3-pentafluoropropene (HFO-1225ye, E or Z isomer), dichlorodifluoromethane (CFC-12), chlorodifluoromethane HCFC-22), methyl chloride (R-40), chlorofluoromethane (HCFC-31), fluoroethane (HFC-161), 1,1,1-trifluoroethane (HFC-143a), chloropentafluoroethane (CFC-115), 1,2-dichloro-1,1,2,2-tetrafluoroethane (CFC-114), 1,1-dichloro-1,2,2,2-tetrafluoroethane (CFC-114a), 2-chloro-1,1,1,2-tetrafluoroethane (HCFC-124), pentafluoroethane (HFC-125), 1,1,2,2-tetrafluoroethane (HFC-134), 1,1,1,2-tetrafluoroethane (HFC-134a), 1,1,1,3,3,3-hexafluoropropane (HFC-236fa), 1,1,1,2,3,3,3-heptafluoropropane (HFC-227ea), 1,1,1,2,2,3,3- heptafluoropropane (HFC-227ea), 1,1,1,3,3-pentafluoropropane(HFC-245fa), 1,1,1,2,2-pentafluoropropane (HFC-245cb), 1,1,1,2,3-pentafluoropropane (HFC-245eb), 1,1,2,2-tetrafluoropropane (HFC-254cb), 1,1,1,2-tetrafluoropropane (HFC-254eb), 1,1,1-trifluoropropane (HFC-263fb), 1,1-difluoro-2-chloroethylene (HCFC-1122), 2-chloro-1,1,2-trifluoroethylene (CFC-1113), 1,1,1,3,3-pentafluorobutane (HFC-365mfc), 1,1,1,2,3,4,4,5,5,5-decafluoropentane (HFC-43-10mee), 1,1,1,2,2,3,4,5,5,6,6,7,7,7-tetradecafluoroheptane, hexafluorobutadiene, 3,3,3-trifluoropropyne, iodotrifluoromethane, deuterated hydrocarbons, deuterated hydrofluorocarbons, perfluorocarbons, fluoroethers, brominated compounds, iodated compounds, alcohols, aldehydes, ketones, nitrous oxide (N₂O) and mixtures thereof. In some embodiments, the tracer is a blend containing two or more hydrofluorocarbons, or one hydrofluorocarbon in combination with one or more perfluorocarbons. In other embodiments, the tracer is a blend of at least one CFC and at least one HCFC, HFC, or PFC.

The tracer may be added to the compositions of the present invention in predetermined quantities to allow detection of any dilution, contamination or other alteration of the composition. Additionally, the tracers may allow detection of product that infringes existing patent rights, by identification of the patent owner's product versus competitive infringing product. Further, in one embodiment, the tracer compounds may allow detection of a manufacturing process by which a product is produced.

In some embodiments, an optional surge tank or accumulator 150 may be inserted between the evaporator 120 and compressor 140 to prevent liquid refrigerant and/or lubricant from entering the compressor 140. The surge tank 150, if present, may return any accumulated liquids to the evaporator 120.

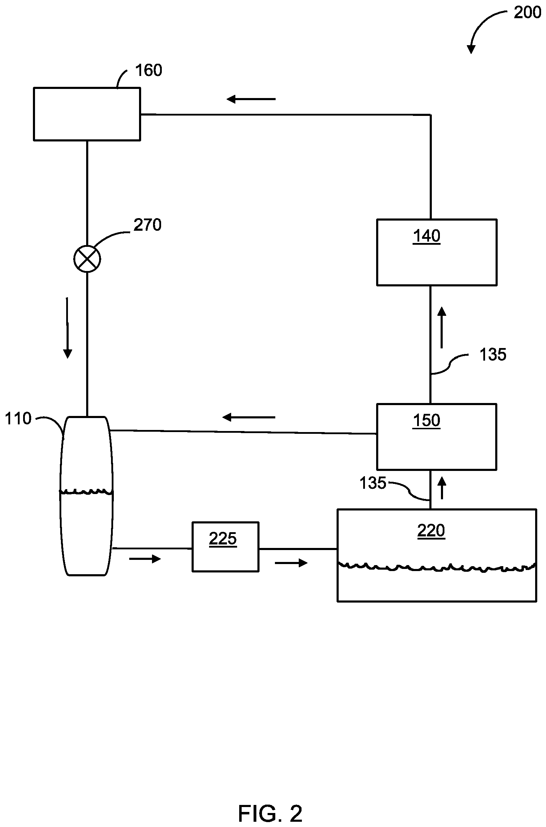

In an alternate embodiment, the refrigeration system may be a flooded evaporator refrigeration system 200. FIG. 2 illustrates a flooded evaporator refrigeration system 200. In the example of FIG. 2, the elements of the system are the same as described above for the direct expansion refrigeration system 100 except that the capillary tube 125 is not present and an optional pump 225 may be present to assist the transfer of refrigerant from the receiving tank 110 to a flooded evaporator 220. The surge tank 150, if present, may return any accumulated liquids to the receiving tank 110 to again be provided to the evaporator 220. The operable connection from the condenser 160 to the receiving tank 110 further includes an expansion valve 270.

The performance of the inventive refrigerant compositions, as compared to R-457A, is presented in Tables 1 to 6 below.

### EXAMPLES

Refrigeration performance of compositions of the present invention were compared to R-404A (a mixture of 44 weight percent HFC-125 (pentafluoroethane), 52 weight percent HFC-143a (1,1,1-trifluoroethane), and 4 weight percent HFC-134a (1,1,1,2-tetrafluoroethane)), R-290 (propane), R-454C (a mixture containing 21.5 weight percent HFC-32 and 78.5 weight percent HFO-1234yf) and R-457A (a mixture containing 18 weight percent HFC-32, 70 weight percent HFO-1234yf, and 12 weight percent HFC-152a (1,1-difluoroethane). Performance was determined at both low and medium temperature refrigeration conditions.

**TABLE 1**

| **PROPERTIES OF CONVENTIONAL REFRIGERANTS - LOW TEMPERATURE REFRIGERATION** | | | | | | | |
|---|---|---|---|---|---|---|---|
| (40°C Avg. Condenser, -35°C Avg. Evaporator, -15°C RGT, 0.7 Comp. Efficiency, 0.1 m³/min Comp. Displacement, 1 TR) | | | | | | | |
| ASHRAE # | T_{DIS} (°C) | Δ T_{DIS} Rel. to R-404A (°C) | Capacity (kJ/m³) | Capacity Rel. to R-404A (%) | COP | Mass Flow (kg/min) | GWP 100 Year (AR4) |
| R-404A | 88.9 | 0.0 | 813.4 | 100.0 | 1.338 | 2.046 | 3,922 |
| R-290 | 95.9 | 7.0 | 752.6 | 92.5 | 1.510 | 0.822 | 3 |
| R-454C | 99.4 | 10.5 | 720.9 | 88.6 | 1.431 | 1.632 | 146 |
| R-457A | 102.0 | 13.1 | 664.9 | 81.7 | 1.465 | 1.500 | 139 |

**TABLE 2**

| **PROPERTIES OF CONVENTIONAL REFRIGERANTS - MEDIUM TEMPERATURE REFRIGERATION** | | | | | | | |
|---|---|---|---|---|---|---|---|
| (40°C Avg. Condenser, -7°C Avg. Evaporator, 18°C RGT, 0.7 Comp. Efficiency, 0.1 m³/min Comp. Displacement, 1 TR) | | | | | | | |
| ASHRAE # | T_{DIS} (°C) | Δ T_{DIS} Rel. to R-404A (°C) | Capacity (kJ/m³) | Capacity Rel. to R-404A (%) | COP | Mass Flow (kg/min) | GWP 100 Year (AR4) |
| R-404A | 79.5 | 0.0 | 2684.4 | 100.0 | 2.882 | 1.674 | 3,922 |
| R-290 | 82.7 | 3.2 | 2254.0 | 84.0 | 3.116 | 0.696 | 3 |
| R-454C | 85.2 | 5.7 | 2429.3 | 90.5 | 2.999 | 1.380 | 146 |
| R-457A | 86.5 | 7.0 | 2247.6 | 83.7 | 3.045 | 1.284 | 139 |

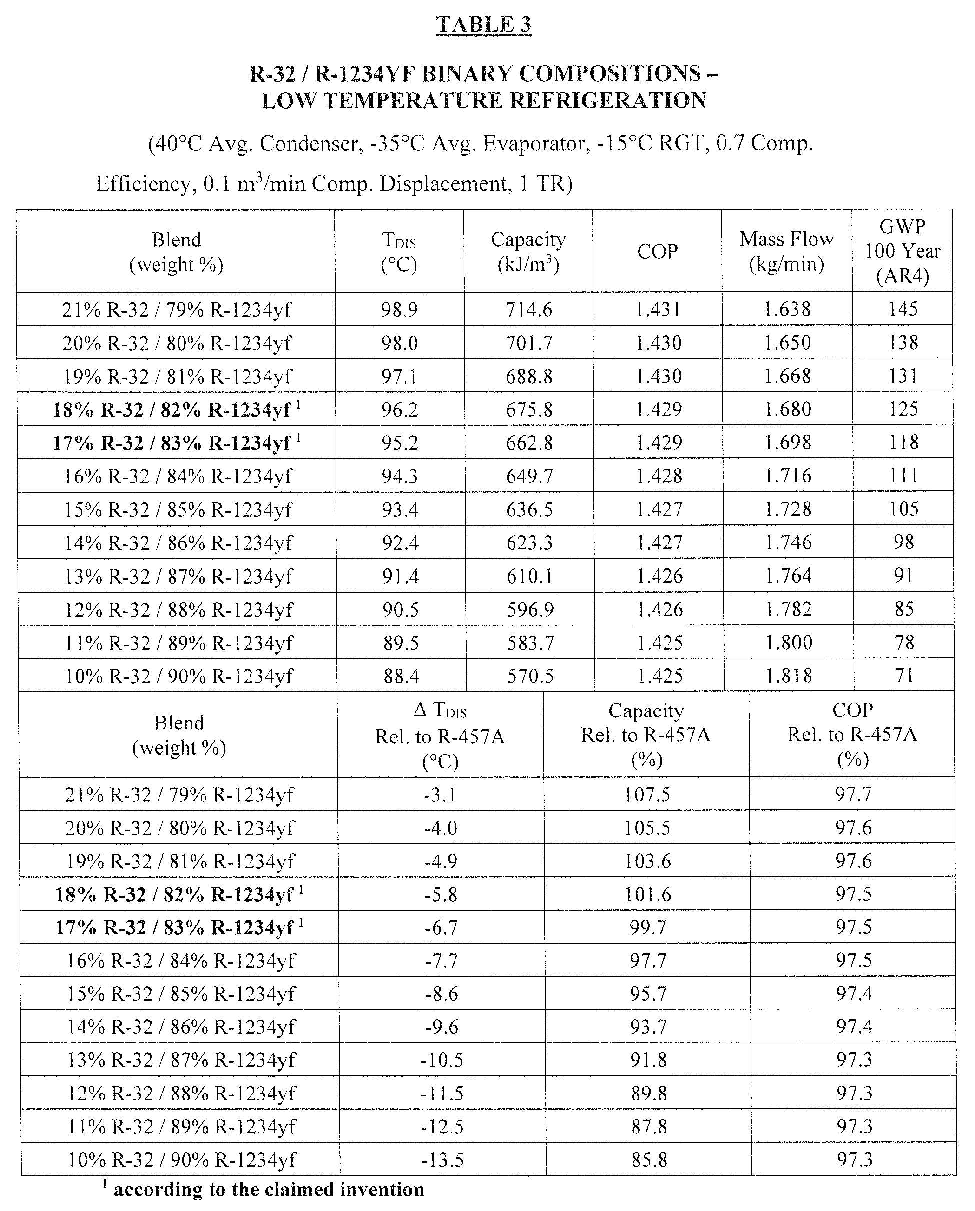

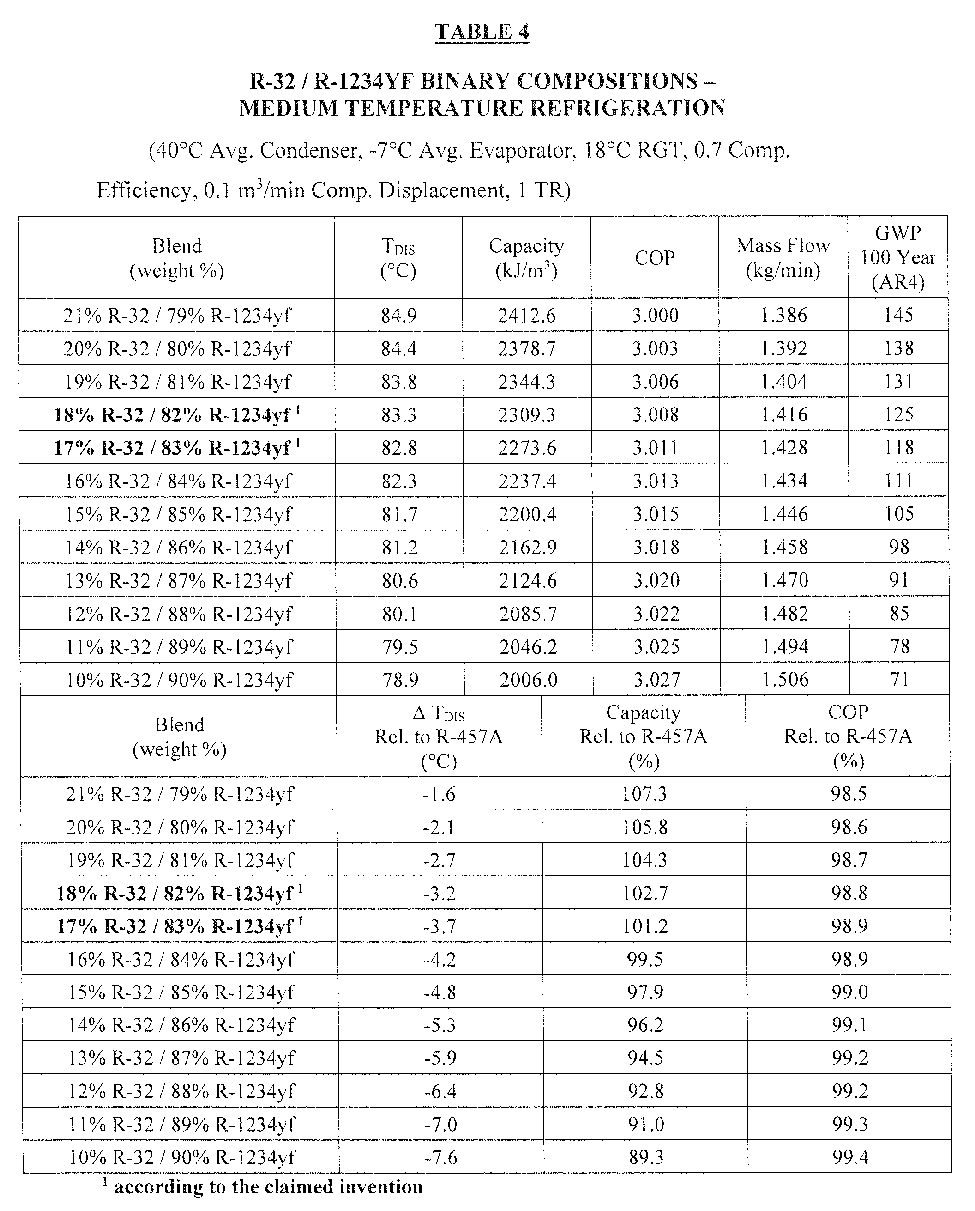

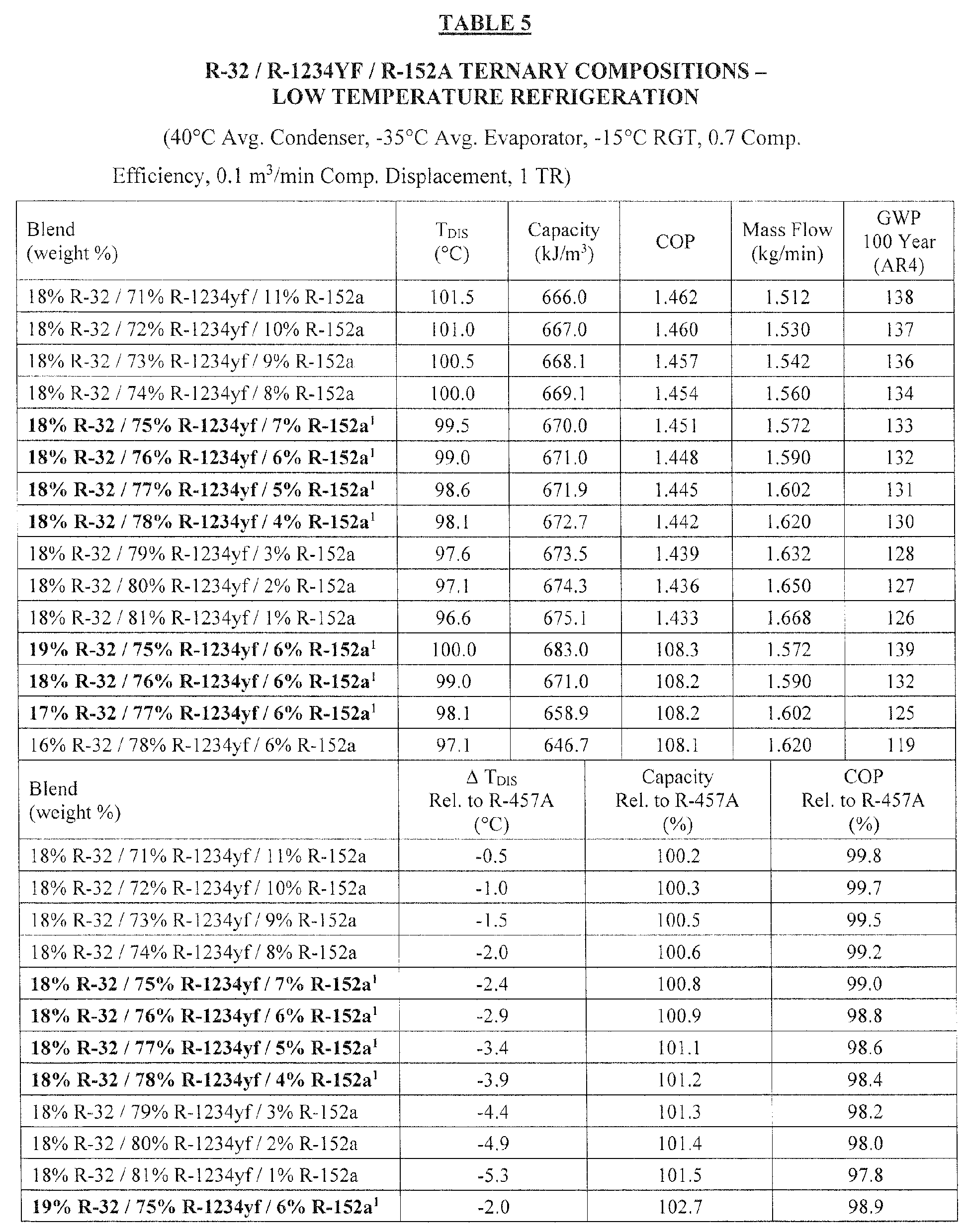

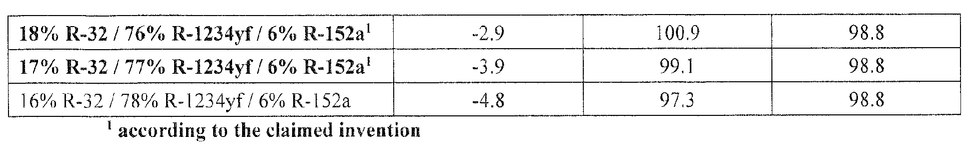

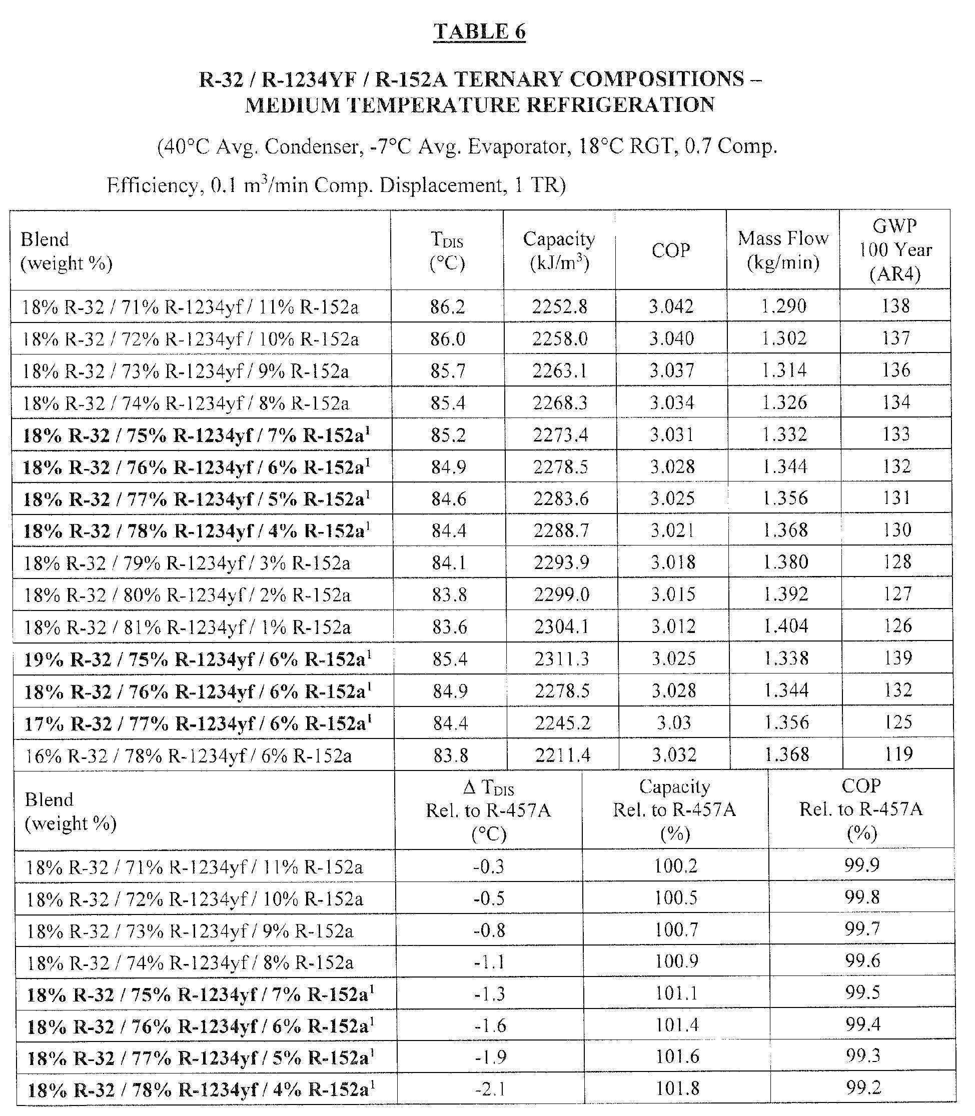

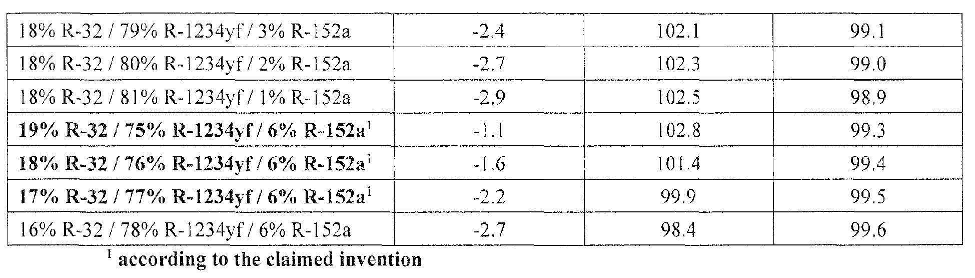

Results show compositions of the present invention exhibit compressor discharge temperatures lower than R-454C and R-457A. They also have capacities and energy efficiency (COP) comparable to the incumbent refrigerants, and R-457A in particular.

While the invention has been described with reference to a preferred embodiment, it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A refrigeration system, comprising:
a low back pressure (LBP) hermetic reciprocating compressor;
and a refrigerant composition;
wherein the refrigerant composition comprises:
difluoromethane (R-32), and 2,3,3,3-tetrafluoropropene (R-1234yf),
and
wherein the difluoromethane (R-32) is present in an amount of 17 to 18 weight percent based on the weight of the refrigerant composition and the 2,3,3,3-tetrafluoropropene (R-1234yf) is present in an amount of 82 to 83 weight percent based on the weight of the refrigerant composition; or
wherein the refrigerant composition further comprises 1,1-difluoroethane (R-152a) and the difluoromethane (R-32) is present in an amount of 17 to 19weight percent based on the weight of the refrigerant composition, the 2,3,3,3-tetrafluoropropene (R-1234yf) is present in an amount of 75 to 78 weight percent based on the weight of the refrigerant composition, and the 1,1-difluoroethane is present in an amount of 4 to 7 weight percent based on the weight of the refrigerant composition.

2. The refrigeration system of claim 1, wherein the difluoromethane is present in an amount of 18 weight percent, the 2,3,3,3-tetrafluoropropene is present in an amount of 76 to 77 weight percent, and the 1,1-difluoroethane is present in an amount of 5 to 6 weight percent based on the weight of the refrigerant composition.

3. The refrigeration system of claim 1 or 2, further comprising a non-refrigerant compound in an amount of 0.1 to 49 weight percent based on the weight of the refrigerant composition,
wherein the non-refrigerant compound preferably includes a lubricant selected from the group consisting of mineral oil, alkylbenzene, polyol esters, polyalkylene glycols, polyvinyl ethers, polycarbonates, perfluoropolyethers, silicones, silicate esters, phosphate esters, paraffins, naphthenes, polyalpha-olefins, and combinations thereof.

4. The refrigeration system of any one of claims 1 to 3:
further comprising an evaporator;
wherein the average evaporator temperature is below -20°C.

5. The refrigeration system of any one of claims 1 to 4:
wherein the compressor discharge temperature is below the compressor discharge temperature of R-457A.

6. A method of replacing a first refrigerant composition comprising R-404A, R-457A, R-290, or R-454C with a second refrigerant composition comprising 82 to 83 weight percent 2,3,3,3-tetrafluoropropene and 17 weight percent to 18 weight percent difluoromethane, wherein the replacing is performed in a refrigeration system including a low back pressure (LBP) hermetic reciprocating compressor.

7. The method of claim 6, wherein the second refrigerant composition further comprises a non-refrigerant compound in an amount of 0.1 to 50 weight percent based on the weight of the refrigerant composition,
wherein the non-refrigerant compound preferably includes a lubricant selected from the group consisting of mineral oil, alkylbenzene, polyol esters, polyalkylene glycols, polyvinyl ethers, polycarbonates, perfluoropolyethers, silicones, silicate esters, phosphate esters, paraffins, naphthenes, polyalpha-olefins, and combinations thereof.

8. The method of claims 6 or 7, wherein the compressor discharge temperature is below the compressor discharge temperature of R-457A.

9. A method of operating a low back pressure (LBP) hermetic reciprocating compressor as part of a refrigeration system, comprising the steps of:
receiving by a low back pressure (LBP) hermetic reciprocating compressor a refrigerant composition including difluoromethane (R-32), and 2,3,3,3-tetrafluoropropene (R-1234yf);
compressing by low back pressure (LBP) hermetic reciprocating compressor the refrigerant composition;
wherein the discharge temperature of the compressor is between 78.0°C and 102.0°C,
wherein the difluoromethane (R-32) is present in an amount of 17 to 18 weight percent based on the weight of the refrigerant composition and the 2,3,3,3-tetrafluoropropene (R-1234yf) is present in an amount of 82 to 83 weight percent based on the weight of the refrigerant composition; or
wherein the refrigerant composition further includes 1,1-difluoroethane (R-152a) and the difluoromethane (R-32) is present in an amount of 17 to 19 weight percent based on the weight of the refrigerant composition, the 2,3,3,3-tetrafluoropropene (R-1234yf) is present in an amount of 75 to 78 weight percent based on the weight of the refrigerant composition, and the 1,1-difluoroethane (R-152a) is present in an amount of 4 to 7 weight percent based on the weight of the refrigerant composition.

10. The method of claim 9, wherein the low back pressure (LBP) hermetic reciprocating compressor receives the refrigerant composition from an evaporator having an evaporator temperature between -40°C and -5°C.

11. The method of claim 9 or 10, wherein the low back pressure (LBP) hermetic reciprocating compressor receives the refrigerant composition from an evaporator having an evaporator temperature between -40°C and -18°C.

12. The method of any one of claims 9 to 11, wherein the discharge temperature of the compressor is between 78.0°C and 99.0°C.

13. The method of any one of claims 9 to 12, wherein the refrigerant composition includes 1,1-difluoroethane (R-152a) and the discharge temperature of the compressor is between 83.5°C and 102.0°C.

14. The method of any one of claims 9 to 13:
further comprising the step of receiving by the low back pressure (LBP) hermetic reciprocating compressor the refrigerant composition from an evaporator;
wherein the average evaporator temperature is below -5°C.

15. The method of claim 14, wherein the average evaporator temperature is between -40°C and -5°C, preferably between -40°C and -18°C.

## Patentansprüche

1. Kühlsystem, Folgendes umfassend:
einen hermetischen Kolbenkompressor von niedrigem Rückdruck (LBP);
und eine Kältemittelzusammensetzung;
wobei die Kältemittelzusammensetzung Folgendes umfasst:
Difluormethan (R-32) und 2,3,3,3-Tetrafluorpropen (R-1234yf), und
wobei das Difluormethan (R-32) in einer Menge von 17 bis 18 Gewichtsprozent, auf das Gewicht der Kältemittelzusammensetzung bezogen, vorliegt, und das 2,3,3,3-Tetrafluorpropen (R-1234yf) in einer Menge von 82 bis 83 Gewichtsprozent, auf das Gewicht der Kältemittelzusammensetzung bezogen, vorliegt; oder
wobei die Kältemittelzusammensetzung ferner 1,1 -Difluorethan (R-152a) umfasst und das Difluormethan (R-32) in einer Menge von 17 bis 19 Gewichtsprozent, auf das Gewicht der Kältemittelzusammensetzung bezogen, vorliegt, das 2,3,3,3-Tetrafluorpropen (R-1234yf) in einer Menge von 75 bis 78 Gewichtsprozent, auf das Gewicht der Kältemittelzusammensetzung bezogen, vorliegt, und das 1,1-Difluorethan in einer Menge von 4 bis 7 Gewichtsprozent, auf das Gewicht der Kältemittelzusammensetzung bezogen, vorliegt.

2. Kühlsystem nach Anspruch 1, wobei das Difluormethan in einer Menge von 18 Gewichtsprozent vorliegt, das 2,3,3,3-Tetrafluorpropen in einer Menge von 76 bis 77 Gewichtsprozent vorliegt, und das 1,1-Difluorethan in einer Menge von 5 bis 6 Gewichtsprozent, auf das Gewicht der Kältemittelzusammensetzung bezogen, vorliegt.

3. Kühlsystem nach Anspruch 1 oder 2, ferner eine Nichtkältemittelverbindung in einer Menge von 0,1 bis 49 Gewichtsprozent, auf das Gewicht der Kältemittelzusammensetzung bezogen, umfassend,
wobei die Nichtkältemittelverbindung bevorzugt ein Gleitmittel ausgewählt aus der Gruppe bestehend aus Mineralöl, Alkylbenzol, Polyolestern, Polyalkylenglycolen, Polylvinylethern, Polycarbonaten, Perfluorpolyethern, Siliconen, Silicatestern, Phosphatestern, Paraffinen, Naphthenen, Polyalpha-Olefinen, und Kombinationen davon einschließt.

4. Kühlsystem nach einem der Ansprüche 1 bis 3:
ferner einen Verdampfer umfassend;
wobei die durchschnittliche Verdampfertemperatur unter -20 °C liegt.

5. Kühlsystem nach einem der Ansprüche 1 bis 4:
wobei die Kompressorentladungstemperatur unter der Kompressorentladungstemperatur von R-457A liegt.

6. Verfahren zum Ersetzen einer ersten Kältemittelzusammensetzung umfassend R-404A, R-457A, R-290 oder R-454C durch eine zweite Kältemittelzusammensetzung umfassend 82 bis 83 Gewichtsprozent 2,3,3,3-Tetrafluorpropen und 17 Gewichtsprozent bis 18 Gewichtsprozent Difluormethan, wobei das Ersetzen in einem Kühlsystem durchgeführt wird, das einen hermetischen Kolbenkompressor von niedrigem Rückdruck (LBP) einschließt.

7. Verfahren nach Anspruch 6, wobei die zweite Kältemittelzusammensetzung ferner eine Nichtkältemittelverbindung in einer Menge von 0,1 bis 50 Gewichtsprozent, auf das Gewicht der Kältemittelzusammensetzung bezogen, umfasst,
wobei die Nichtkältemittelverbindung bevorzugt ein Gleitmittel ausgewählt aus der Gruppe bestehend aus Mineralöl, Alkylbenzol, Polyolestern, Polyalkylenglycolen, Polylvinylethern, Polycarbonaten, Perfluorpolyethern, Siliconen, Silicatestern, Phosphatestern, Paraffinen, Naphthenen, Polyalpha-Olefinen und Kombinationen davon einschließt.

8. Verfahren nach Anspruch 6 oder 7, wobei die Kompressorentladungstemperatur unter der Kompressorentladungstemperatur von R-457A liegt.

9. Verfahren zum Betreiben eines hermetischen Kolbenkompressors von niedrigem Rückdruck (LBP) als Teil eines Kühlsystems, umfassend die folgenden Schritte:
Aufnehmen, durch einen hermetischen Kolbenkompressor von niedrigem Rückdruck (LBP), einer Kältemittelzusammensetzung einschließlich Difluormethan (R-32) und 2,3,3,3-Tetrafluorpropen (R-1234yf);
Komprimieren, durch einen hermetischen Kolbenkompressor von niedrigem Rückdruck (LBP), der Kältemittelzusammensetzung;
wobei die Entladungstemperatur des Kompressors zwischen 78,0 °C und 102,0 °C liegt,
wobei das Difluormethan (R-32) in einer Menge von 17 bis 18 Gewichtsprozent, auf das Gewicht der Kältemittelzusammensetzung bezogen, vorliegt, und das 2,3,3,3-Tetrafluorpropen (R-1234yf) in einer Menge von 82 bis 83 Gewichtsprozent, auf das Gewicht der Kältemittelzusammensetzung bezogen, vorliegt; oder
wobei die Kältemittelzusammensetzung ferner 1,1-Difluorethan (R-152a) einschließt und das Difluormethan (R-32) in einer Menge von 17 bis 19 Gewichtsprozent, auf das Gewicht der Kältemittelzusammensetzung bezogen, vorliegt, das 2,3,3,3-Tetrafluorpropen (R-1234yf) einer Menge von 75 bis 78 Gewichtsprozent, auf das Gewicht der Kältemittelzusammensetzung bezogen, vorliegt, und das 1,1-Difluorethan (R-152a) in einer Menge von 4 bis 7 Gewichtsprozent, auf das Gewicht der Kältemittelzusammensetzung bezogen, vorliegt.

10. Verfahren nach Anspruch 9, wobei der hermetische Kolbenkompressor von niedrigem Rückdruck (LBP) die Kältemittelzusammensetzung von einem Verdampfer aufnimmt, der eine Verdampfertemperatur zwischen -40 °C und -5 °C aufweist.

11. Verfahren nach Anspruch 9 oder 10, wobei der hermetische Kolbenkompressor von niedrigem Rückdruck (LBP) die Kältemittelzusammensetzung von einem Verdampfer aufnimmt, der eine Verdampfertemperatur zwischen -40 °C und - 18 °C aufweist.

12. Verfahren nach einem der Ansprüche 9 bis 11, wobei die Entladungstemperatur des Kompressors zwischen 78,0 °C und 99,0 °C liegt.

13. Verfahren nach einem der Ansprüche 9 bis 12, wobei die Kältemittelzusammensetzung 1,1-Difluorethan (R-152a) einschließt und die Entladungstemperatur des Kompressors zwischen 83,5 °C und 102,0 °C liegt.

14. Verfahren nach einem der Ansprüche 9 bis 13:
ferner den Schritt des Aufnehmens, durch den hermetischen Kolbenkompressor von niedrigem Rückdruck (LBP), der Kältemittelzusammensetzung von einem Verdampfer;
wobei die durchschnittliche Verdampfertemperatur unter -5 °C liegt.

15. Verfahren nach Anspruch 14, wobei die durchschnittliche Verdampfertemperatur zwischen -40 °C und -5 °C, bevorzugt zwischen -40 °C und -18 °C liegt.

## Revendications

1. Système de réfrigération, comprenant :
un compresseur alternatif hermétique à faible pression de retour (LBP) ;
et une composition réfrigérante ;
dans lequel la composition réfrigérante comprend :
le difluorométhane (R-32), et le 2,3,3,3-tétrafluoropropène (R-1234yf), et
dans lequel le difluorométhane (R-32) est présent en une quantité de 17 à 18 pour cent en poids sur la base du poids de la composition réfrigérante et le 2,3,3,3-tétrafluoropropène (R-1234yf) est présent en une quantité de 82 à 83 pour cent en poids sur la base du poids de la composition réfrigérante ; ou
dans lequel la composition réfrigérante comprend en outre le 1,1 -difluoroéthane (R-152a) et le difluorométhane (R-32) est présent en une quantité de 17 à 19 pour cent en poids sur la base du poids de la composition réfrigérante, le 2,3,3,3-tétrafluoropropène (R-1234yf) est présent en une quantité de 75 à 78 pour cent en poids sur la base du poids de la composition réfrigérante, et le 1,1-difluoroéthane est présent en une quantité de 4 à 7 pour cent en poids sur la base du poids de la composition réfrigérante.

2. Système de réfrigération selon la revendication 1, dans lequel le difluorométhane est présent en une quantité de 18 pour cent en poids, le 2,3,3,3-tétrafluoropropène est présent en une quantité de 76 à 77 pour cent en poids, et le 1,1-difluoroéthane est présent en une quantité de 5 à 6 pour cent en poids sur la base du poids de la composition réfrigérante.

3. Système de réfrigération selon la revendication 1 ou 2, comprenant en outre un composé non réfrigérant en une quantité de 0,1 à 49 pour cent en poids sur la base du poids de la composition réfrigérante,
dans lequel le composé non réfrigérant inclut préférablement un lubrifiant sélectionné dans le groupe constitué d'une huile minérale, d'alkylbenzène, d'esters de polyol, de polyalkylène glycols, de poly(éthers de vinyle), de polycarbonates, de perfluoropolyéthers, de silicones, d'ester silicates, d'ester phosphates, de paraffines, de naphtènes, de polyalpha-oléfines, et de combinaisons de ceux-ci.

4. Système de réfrigération selon l'une quelconque des revendications 1 à 3 :
comprenant en outre un évaporateur ;
dans lequel la température moyenne d'évaporateur est inférieure à -20 °C.

5. Système de réfrigération selon l'une quelconque des revendications 1 à 4 :
dans lequel la température d'évacuation de compresseur est inférieure à la température d'évacuation de compresseur de R-457A.

6. Procédé de remplacement d'une première composition réfrigérante comprenant R-404A, R-457A, R-290, ou R-454C par une seconde composition réfrigérante comprenant de 82 à 83 pour cent en poids de 2,3,3,3-tétrafluoropropène et de 17 pour cent en poids à 18 pour cent en poids de difluorométhane, dans lequel le remplacement est effectué dans un système de réfrigération incluant un compresseur alternatif hermétique à faible pression de retour (LBP).

7. Procédé selon la revendication 6, dans lequel la seconde composition réfrigérante comprend en outre un composé non réfrigérant en une quantité de 0,1 à 50 pour cent en poids sur la base du poids de la composition réfrigérante,
dans lequel le composé non réfrigérant inclut préférablement un lubrifiant sélectionné dans le groupe constitué d'une huile minérale, d'alkylbenzène, d'esters de polyol, de polyalkylène glycols, de poly(éthers de vinyle), de polycarbonates, de perfluoropolyéthers, de silicones, d'ester silicates, d'ester phosphates, de paraffines, de naphtènes, de polyalpha-oléfines, et de combinaisons de ceux-ci.

8. Procédé selon les revendications 6 ou 7, dans lequel la température d'évacuation de compresseur est inférieure à la température d'évacuation de compresseur de R-457A.

9. Procédé de fonctionnement d'un compresseur alternatif hermétique à faible pression de retour (LBP) comme partie d'un système de réfrigération, comprenant les étapes consistant à :
recevoir de la part d'un compresseur alternatif hermétique à faible pression de retour (LBP) une composition réfrigérante incluant le difluorométhane (R-32), et le 2,3,3,3-tétrafluoropropène (R-1234yf) ;
comprimer par le compresseur alternatif hermétique à faible pression de retour (LBP) la composition réfrigérante ;
dans lequel la température d'évacuation du compresseur est comprise entre 78,0 °C et 102,0 °C,
dans lequel le difluorométhane (R-32) est présent en une quantité de 17 à 18 pour cent en poids sur la base du poids de la composition réfrigérante et le 2,3,3,3-tétrafluoropropène (R-1234yf) est présent en une quantité de 82 à 83 pour cent en poids sur la base du poids de la composition réfrigérante ; ou
dans lequel la composition réfrigérante inclut en outre le 1,1-difluoroéthane (R-152a) et le difluorométhane (R-32) est présent en une quantité de 17 à 19 pour cent en poids sur la base du poids de la composition réfrigérante, le 2,3,3,3-tétrafluoropropène (R-1234yf) est présent en une quantité de 75 à 78 pour cent en poids sur la base du poids de la composition réfrigérante, et le 1,1-difluoroéthane (R-152a) est présent en une quantité de 4 à 7 pour cent en poids sur la base du poids de la composition réfrigérante.

10. Procédé selon la revendication 9, dans lequel le compresseur alternatif hermétique à faible pression de retour (LBP) reçoit la composition réfrigérante depuis un évaporateur ayant une température d'évaporateur comprise entre -40 °C et -5 °C.

11. Procédé selon la revendication 9 ou 10, dans lequel le compresseur alternatif hermétique à faible pression de retour (LBP) reçoit la composition réfrigérante depuis un évaporateur ayant une température d'évaporateur comprise entre -40 °C et -18 °C.

12. Procédé selon l'une quelconque des revendications 9 à 11, dans lequel la température d'évacuation du compresseur est comprise entre 78,0 °C et 99,0 °C.

13. Procédé selon l'une quelconque des revendications 9 à 12, dans lequel la composition réfrigérante inclut le 1,1-difluoroéthane (R-152a) et la température d'évacuation du compresseur est comprise entre 83,5 °C et 102,0 °C.

14. Procédé selon l'une quelconque des revendications 9 à 13 :
comprenant en outre l'étape consistant à recevoir par le compresseur alternatif hermétique à faible pression de retour (LBP) la composition réfrigérante de la part d'un évaporateur ;
dans lequel la température moyenne d'évaporateur est inférieure à -5 °C.

15. Procédé selon la revendication 14, dans lequel la température moyenne d'évaporateur est comprise entre -40 °C et -5 °C, préférablement entre -40 °C et -18 °C.
